# EUROPEAN PATENT APPLICATION

(11) **EP 2 320 647 A1**
(43) Date of publication of application: **11.05.2011**
(21) Application number: 10168934.7
(22) Date of filing: 08.07.2010
(51) Int. Cl.: H04N 5/445

(54) **Display apparatus and control method thereof**

(30) Priority: 06.11.2009 KR 20090107079
(71) Applicant: SAMSUNG ELECTRONICS CO., LTD., Suwon-si, Gyeonggi-do (KR)
(72) Inventor: Phang, Joon-ho, Seoul (KR); Lee, Chang-soo, Seoul (KR); Lee, Sang-hee, Seoul (KR); Lee, Dong-heon, Seoul (KR); Lee, Hyeon-ji, Seoul (KR); Yoon, Yeo-ri, Gyeonggi-do (KR)
(74) Representative: Hewett, Jonathan Michael Richard

(57) **Abstract**

A display apparatus and a control method thereof are provided. The display apparatus includes: a display unit which displays an image; a user input unit which receives a user input; and a controller which controls the display unit to display a plurality of first icons corresponding to a plurality of content items selected by the user input and at least one function which commonly corresponds to the plurality of content items, and performs the function selected by a user input.

## Description

The present invention relates to providing contents and, more particularly, to providing additional functions to be provided by a plurality of content items together with information regarding the plurality of content items.

In general, application programs related to contents provide a variety of services through additional functions. For example, meta information regarding the contents can be used for a variety of purposes, and a variety of services can be provided from the contents.

Due to the recent developments, a large amount of information may be included in a single content item such as a photograph, music, or video. In this respect, if a user selects a specific content item, information regarding functions to be provided by the selected content item is provided to a user to enhance user convenience for usage of the functions. However, in order to confirm the functions provided by different content items, the user needs to return to a browser state to select the different content items.

In a display apparatus, such as a television (TV), which has a large screen and hierarchical stages for usage of functions and information of contents, the plurality of content items needs to be selected, and then, the functions of the content items need to be individually performed.

Thus, it may be difficult to promptly perform a variety of functions for a plurality of content items.

Exemplary embodiments provide a display apparatus which is capable of providing a list of additional functions to be provided by a plurality of contents selected by a user together with individual information regarding the plurality of contents to promptly and conveniently control the plurality of contents, and a control method thereof.

According to an aspect of the present invention, there is provided a display apparatus including: a display unit which displays an image; a user input unit which receives a user input; and a controller which controls the display unit to display a plurality of icons corresponding to a plurality of content items selected by a user input and at least one function which commonly corresponds to the plurality of contents, and performs a function selected from among the at least one function by a user input.

The controller may control the display unit to display additional information regarding at least one of the plurality of content items, along with the plurality of icons and the at least one function.

The user input unit may receive a user input for selecting one of the plurality of icons, and the controller controls the display unit to display additional information regarding a content item corresponding to the selected icon, along with the plurality of icons and the at least one function.

The controller may control the display unit to display the plurality of icons in an overlapped manner with the selected icon being arranged on top.

The controller may control the display unit to display the selected icon as highlighted.

The user input unit may receive a user input for replacing the selected icon with another icon, and the controller controls the display unit to display additional information regarding a content item corresponding to the other icon.

The additional information may include integrated information corresponding to all the plurality of content items.

The plurality of icons may be displayed as thumbnail images.

According to another aspect of the present invention, there is provided a control method of a display apparatus, including: receiving a user input; displaying a plurality of icons corresponding to a plurality of content items selected by the user input; displaying at least one function which commonly corresponds to the plurality of contents; and performing a function selected by a user from among the at least one function.

The method may further include: displaying additional information regarding at least one of the plurality of contents.

The user input receiving may include: receiving a user input for selecting one of the plurality of icons, and the additional information displaying may include: displaying additional information regarding a content item corresponding to the selected icon.

The plurality of icons may be displayed in an overlapped manner with the selected icon being arranged on top.

The selected icon may be displayed as highlighted.

The user input receiving may include: receiving a user input for replacing the selected icon with a different icon, and the additional information displaying may include: displaying additional information regarding a content item corresponding to the replaced icon.

The additional information may include integrated information corresponding to all the plurality of content items.

The plurality of icons may be displayed as thumbnail images.

The above and/or other aspects will become apparent and more readily appreciated from the following description of exemplary embodiments, with reference to the accompanying drawings, in which:
FIG. 1 is a block diagram illustrating a configuration of a display apparatus according to an exemplary embodiment;
FIG. 2A illustrates an example of a screen which displays a plurality of second icons corresponding to all content items;
FIG. 2B illustrates a user interface displayed according to an exemplary embodiment;
FIGS. 3A and 3B illustrate a user interface displayed according to another exemplary embodiment;
FIG. 4A illustrates another example of a screen which displays a plurality of second icons corresponding to all content items;
FIG. 4B illustrates a user interface displayed according to another exemplary embodiment;
FIGS. 5A and 5B illustrate a user interface displayed according to another exemplary embodiment; and
FIG. 6 is a flowchart for illustrating a control process of a display apparatus according to an exemplary embodiment.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters.

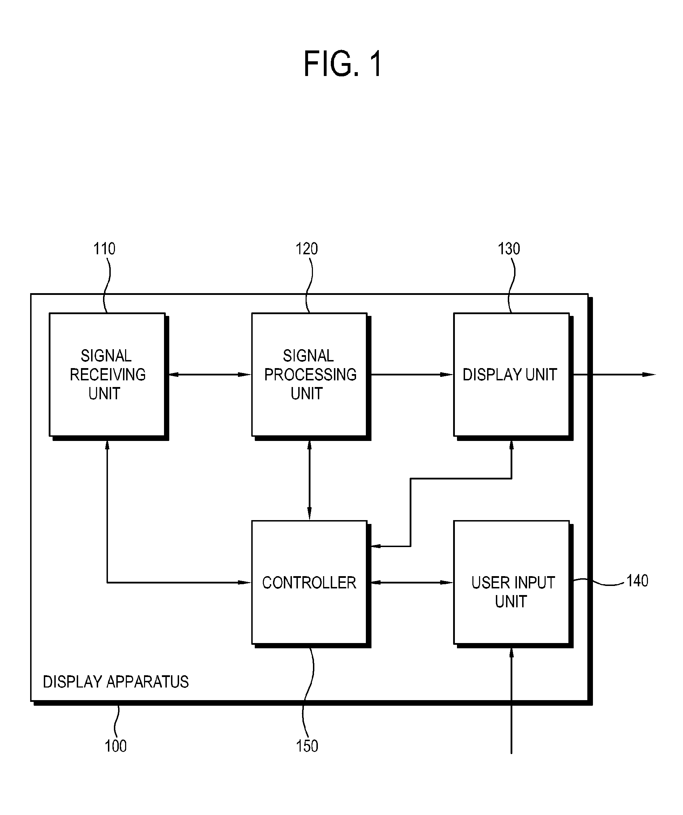

FIG. 1 is a block diagram illustrating a configuration of a display apparatus according to an exemplary embodiment.

A display apparatus 100 according to an exemplary embodiment may include a TV, a personal computer (PC), a set-top box, a mobile terminal, or an electronic device which may display a plurality of content items and additional functions related to the content items.

The display apparatus 100 may include a signal receiving unit 110, a signal processing unit 120, a display unit 130, a user input unit 140, and a controller 150. The signal receiving unit 110 may receive an image signal. Specifically, the signal receiving unit 110 may receive a digital broadcast signal in a transport stream (TS) format, or may receive data through Internet Protocol (IP) based communication.

The signal processing unit 120 may process the image signal received by the signal receiving unit 110. Specifically, the signal processing unit 120 may decode an encoded image signal, or may demodulate the received signal into an original signal.

The display unit 130 may display an image based on the image signal processed by the signal processing unit 120. The display unit 130 may include a display panel such as a liquid crystal display (LCD), an organic light emitting display (OLED), a plasma display panel (PDP) or the like, and a panel driver.

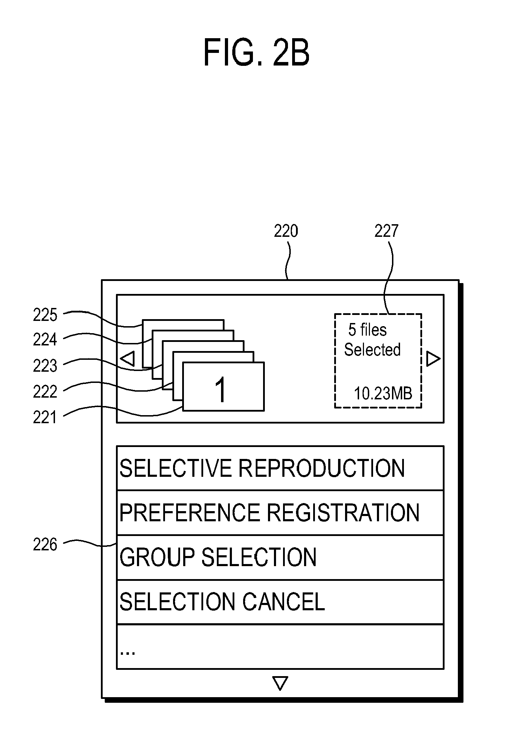

The display unit 130 may display a plurality of first icons corresponding to a plurality of content items. The first icons represent the content items selected by a user. Specifically, if the user selects one or more content items from the plurality of content items, the display unit 130 may display the selected content items as the plurality of first icons. The first icons are described below in more detail with reference to FIG. 2B.

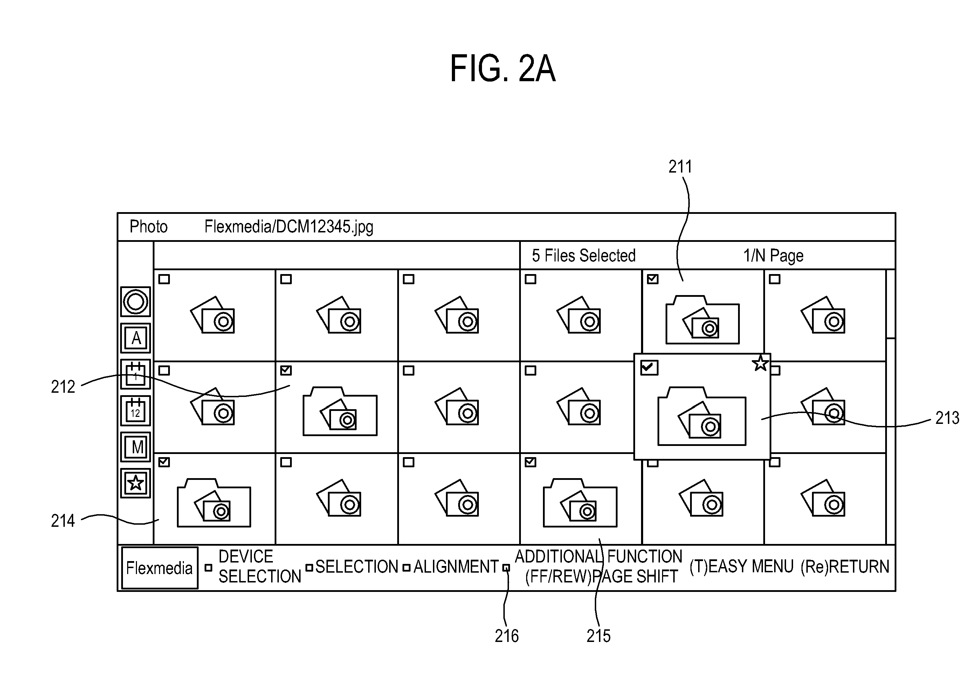

Further, the display unit 130 may display a plurality of second icons corresponding to all of the content items on a screen thereof. The second icons represent all of the content items which can be provided by the display apparatus 100. All of the content items may be stored in the display apparatus 100, or may be received from an external device or an external server. If a user enters a menu related to the contents, the display unit 130 may display all of the content items as the plurality of second icons on the screen thereof, which is described below in more detail with reference to FIG. 2A.

For example, the first icons or the second icons may be images related to the content items. Specifically, the first icons or the second icons may be images indicating the type of the content items. For example, the first or second icons corresponding to photograph files may be displayed as camera images; and the first or second icons corresponding to music files may be displayed as music images. Further, the first or second icons may be images indicating the content items themselves. For example, the first or second icons corresponding to photograph files may be displayed as corresponding photograph images; and the first or second icons corresponding to video files may be displayed as main still images of corresponding videos. Here, the plurality of content items may include content items of the same type or content items of different types. Also, the first and second icons may be displayed in the form of thumbnail images.

The user input unit 140 may receive a user input. For example, the user input may include at least one of a touch input and a button input. Specifically, the user input unit 140 may receive the user input through a remote controller (not shown), a touch panel, or an input key which is provided in a main body of the display apparatus 100.

The controller 150 may control the display unit 130 to display the plurality of first icons corresponding to the plurality of content items selected by the user and at least one function which commonly corresponds to the plurality of content items.

The controller 150 may control the display unit 130 to display additional information regarding at least one of the plurality of content items. The additional information may include at least one of integrated information corresponding to all of the content items and individual information corresponding to the respective content items. For example, if five content files are selected, the information regarding the size of the five files is the integrated information, and information regarding the size of each file is the individual information.

According to an exemplary embodiment, the user input unit 140 may receive a user input for selecting any one of the plurality of first icons. The controller 150 may control the display unit 130 to display the additional information regarding a content item corresponding to the selected first icon.

According to another exemplary embodiment, the user input unit 140 may receive a user input for replacing the selected first icon with a different first icon. The controller 150 may control the display unit 130 to display the additional information regarding a content item corresponding to the replaced first icon.

In above exemplary embodiments, the controller 150 may control the display unit 130 to display the plurality of first icons in an overlapped manner with the selected or replaced first icon being arranged on the top. Further, the controller 150 may control the display unit 130 to display the selected or replaced first icon to be highlighted.

Further, the controller 150 may perform the function selected by the user input.

FIG. 2A illustrates an example of a screen which displays the plurality of second icons corresponding to all of the content items.

When a user enters a menu related to the contents, the plurality of second icons corresponding to all of the content items is displayed on a screen. FIG. 2A illustrates a case that the user enters a menu related to photograph contents.

In FIG. 2A, each image corresponds to a second icon. For example, the second icons are camera images or photograph images, which represent photograph files. For example, the second icons, which are selected by the user, may be displayed as the camera images; and the second icons, which are not selected by the user, may be displayed as the photograph images.

For example, if the user selects the second icons 211, 212, 213, 214 and 215, the selected icons 211, 212, 213, 214 and 215 are changed into the camera images, as shown in FIG 2A.

In order to display functions related to the selected icons 211, 212, 213, 214 and 215, the user may use an additional function button 216, shown in FIG. 2A.

FIG. 2B illustrates a user interface displayed according to an exemplary embodiment.

For example, if the icons 211, 212, 213, 214 and 215 are selected, as shown in FIG. 2A, if the user clicks the additional function button 216, a user interface 220, as shown in FIG. 2B, is displayed on a screen. In this case, the user interface 220 may display a plurality of first icons 221, 222, 223, 224, and 225 corresponding to the plurality of content items selected by the user and at least one function from a functions list 226 which commonly corresponds to the plurality of content items.

The selected plurality of content items is displayed as the plurality of first icons 221, 222, 223, 224 and 225. In FIG. 2B, the plurality of images displayed in an overlapped manner corresponds to the plurality of first icons 221, 222, 223, 224 and 225, respectively.

The at least one function which commonly corresponds to the selected plurality of content items may be displayed as a list of functions 226. For example, as shown in FIG. 2B, the list 226 may include selective reproduction function, preference registration function, group selection function, selection cancel function, or other like function.

For example, the additional information regarding at least one of the plurality of content item may be displayed. The additional information may include at least one of the integrated information piece corresponding to all of the plurality of content items and individual information pieces, each corresponding to the respective content items. In FIG. 2B, the displayed integrated information corresponding to all of the plurality of content items indicates that five files are selected, and a file storage capacity is 10.23 MB.

Related art methods provide a list of functions which can be performed for each of a plurality contents. That is, in order to perform a variety of functions for the plurality of contents, a user should repeat the processes of performing functions in connection with one content and then selecting a different content. In this case, the user should manipulate a remote controller many times, thereby feeling inconvenient. Further, as the number of the contents or the functions thereof is increased, the number of manipulations of the remote controller of the user should be increased.

According to exemplary embodiments, since the plurality of first icons corresponding to the selected plurality of content items and at least one function which commonly corresponds to the plurality of content items are displayed at the same time, the related art problems may be solved. Thus, the user can perform a variety of functions in connection with the plurality of content items, and can use the additional function while viewing information about the selected content items.

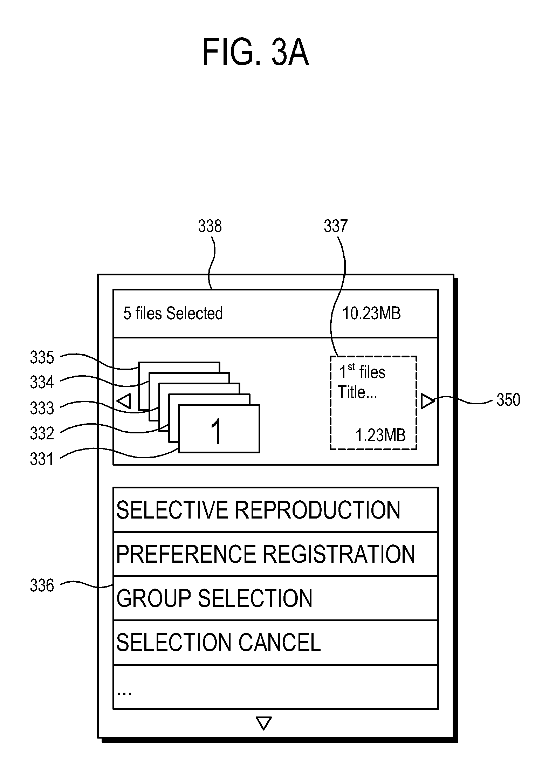

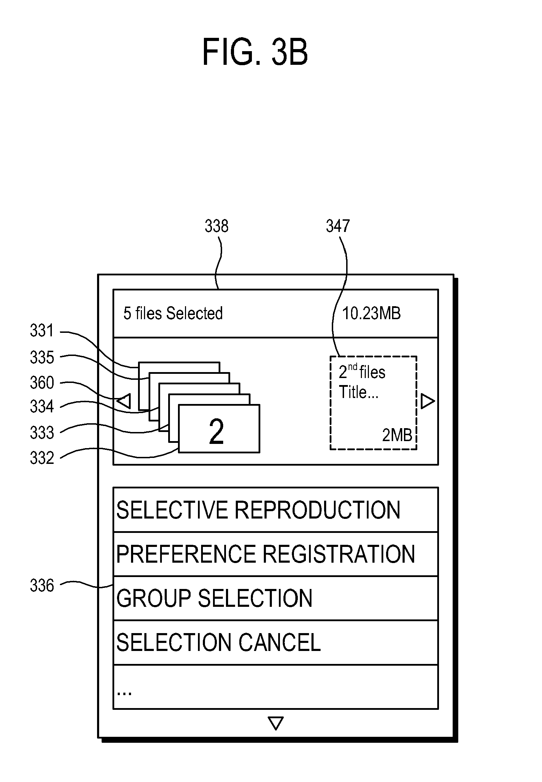

FIGS. 3A and 3B illustrate a user interface displayed according to another exemplary embodiment.

In the state that the user interface 220 is displayed, if the user selects any one of the plurality of first icons, the additional information corresponding to the selected first icon may be displayed.

For example, if the user selects the first icon 331 from among a plurality of first icons 331, 332, 333, 334, and 335, additional information 337 of a content item corresponding to the first icon 331 is displayed. For example, as shown in FIG. 3A, a file title corresponding to the first icon 331 and a file storage capacity of 1.22 MB are displayed.

As shown in FIG. 3B, if the user replaces the selected first icon 331 with a different first icon, the additional information regarding a content item corresponding to the replaced first icon may be displayed.

For example, if the user replaces the first icon 331 with the another first icon 332, the additional information 347 of a content item corresponding to the other first icon 332 is displayed. For example, as shown in FIG. 3B, a file title corresponding to the first icon 332 and a file storage capacity of 2 MB are displayed.

In this case, if the user clicks a button 350 in the display state shown in FIG. 3A, the first icon 331 is replaced with the other first icon 332, and thus, a screen, as shown in FIG. 3B, is displayed. On the other hand, if the user clicks a button 360 in the display state shown in FIG. 3B, the other first icon 332 is replaced with the first icon 331, and thus, the screen, as shown in FIG. 3A is displayed.

Integrated information item 338 corresponding to all of the plurality of content items and at least one function from a functions list 336 which commonly corresponds to the plurality of content items are the same as described above with reference to FIG. 2B.

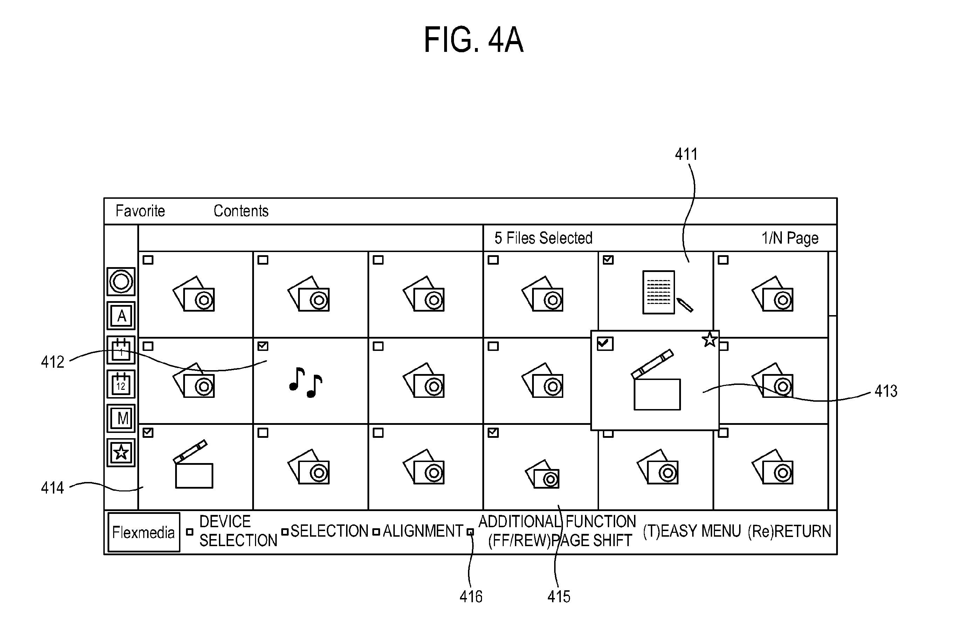

FIG. 4A illustrates another example of a screen which displays a plurality of second icons corresponding to all of the content items.

In FIG. 4A, each shown image corresponds to each second icon. In this respect, the second icons may be at least one of photograph images, document images, musical note images, or movie images, which represent photograph files, document files, music files, or movie files, respectively.

For example, the user may select five second icons 411, 412, 413, 414, and 415, to select a document file 411, a music file 412, movie files 413 and 414, and a photograph file 415, respectively.

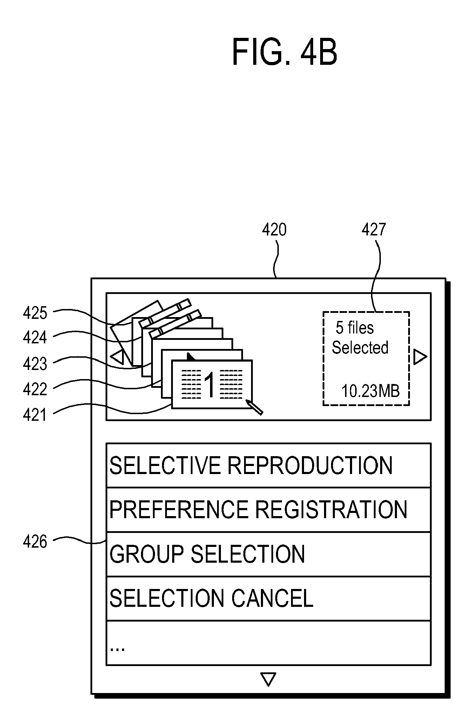

FIG. 4B illustrates a user interface displayed according to another exemplary embodiment.

If the user clicks an additional function button 416 when the second icons 411, 412, 413, 414, and 415 are selected, as shown in FIG. 4A, a user interface 420 is displayed on a screen, as shown in FIG. 4B. For example, the user interface 420 may display a plurality of first icons 421, 422, 423, 424, and 425 corresponding to the plurality of content items 411, 412, 413, 414, and 415 selected by the user and at least one function 426 which commonly corresponds to the plurality of content items.

In FIG. 4B, a plurality of images which is displayed in an overlapped manner represents the first icons 421, 422, 423, 424, and 425, respectively. In this respect, the plurality of first icons may be represented as at least one of photograph images, document images, musical note images, or movie images which correspond to selected photograph files, document files, music files, or movie files, respectively.

Further, the at least one function 426 which commonly corresponds to the selected plurality of content items and the additional information 427 regarding at least one of the plurality of content items may be displayed, which is the same as described above with reference to FIG. 2B.

In FIG. 2B, the selected plurality of content items are the same type, but in FIG. 4B, the selected plurality of content items may be different types. Thus, the user can perform, substantially simultaneously, a variety of functions in connection with a plurality of content items of different types, and can use the additional functions while viewing information about the selected content items.

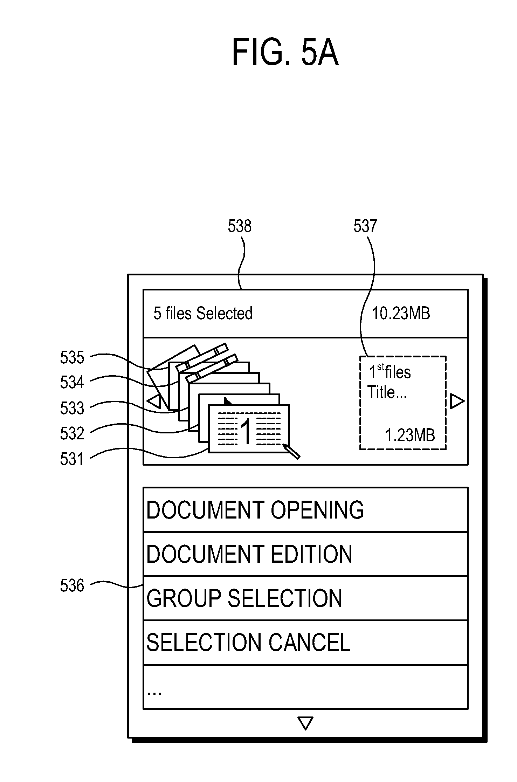

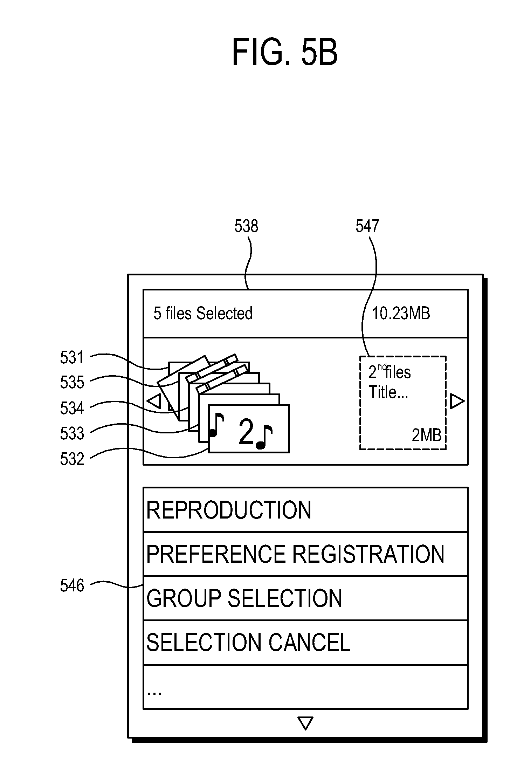

FIGS. 5A and 5B illustrate another example of a user interface displayed according to another exemplary embodiment.

If the user selects any one of the plurality of first icons, the additional information regarding a content item corresponding to the selected first icon may be displayed.

For example, if the user selects the first icon 531 from among a plurality of first icons 531, 532, 533, 534 and 535, the additional information 537 of a content item corresponding to the selected first icon 531 and a list of functions 536, which can be performed in connection with the first icon 531, are displayed. For example, as shown in FIG. 5A, a file title and a file storage capacity of 1.23 MB corresponding to the first icon 531 are displayed. Further, the functions 536 which can be performed in connection with the first icon 531, for example, such as document opening, document edition, group selection, selection cancel, etc.

In the display state shown in FIG. 5A, for example, if the user replaces the first icon 531 with another first icon 532, additional information 547 of a content item corresponding to the other first icon 532 and a list of functions 546, which can be performed in connection with the other first icon 532, are displayed.

For example, as shown in FIG. 5B, a file title and a file storage capacity of 2 MB corresponding to the other first icon 532 are displayed. Further, the functions 536 such as reproduction, preference registration, group selection, selection cancel, etc., which can be performed in connection with the other first icon 532, are displayed in the functions list 546.

Integrated information 538 corresponding to all of the plurality of content items is the same as described above with reference to FIG. 2B.

The selected first icon 531 or the other first icon 532 of the plurality of first icons 531, 532, 533, 534, and 535 may be displayed in various manners. For example, as shown in FIGS. 5A and 5B, the first icons 531, 532, 533, 534, and 535 may be displayed in an overlapped manner, with the selected first icon 531 (FIG. 5A) or the other first icon 532 (FIG. 5B) being arranged on the top. Alternatively, the selected or other first icon may be highlighted.

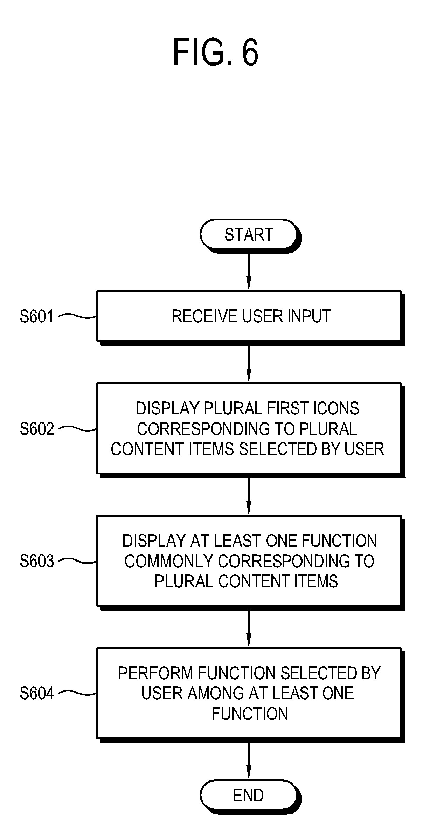

FIG. 6 is a flowchart illustrating a control process of a display apparatus according to an exemplary embodiment.

A user input for selecting the content items is received through the user input unit 140 (S601).

Then, a plurality of first icons corresponding to a plurality of content items selected by the user is displayed through the display unit 130 (S602).

Further, at least one function, which commonly corresponds to the plurality of content items, is displayed through the display unit 130 (S603).

Then, a function selected by the user from among the at least one function is performed by the controller 150 (S604).

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display unit which displays an image;
a user input unit which receives a user input; and
a controller which controls the display unit to display a plurality of icons corresponding to a plurality of content items selected by a user input and at least one function which commonly corresponds to the plurality of content items, and performs a function selected from among the at least one function by a user input.

2. The display apparatus according to claim 1, wherein the controller controls the display unit to display additional information regarding at least one of the plurality of content items, along with the plurality of icons and the at least one function.

3. The display apparatus according to claim 2, wherein the user input unit receives a user input for selecting one of the plurality of first icons, and the controller controls the display unit to display the additional information regarding a content item corresponding to the selected first icon, along with the plurality of first icons and the at least one function.

4. The display apparatus according to claim 3, wherein the controller controls the display unit to display the plurality of icons in an overlapped manner with the selected icon being arranged on top.

5. The display apparatus according to claim 3, wherein the controller controls the display unit to display the selected icon as highlighted.

6. The display apparatus according to claim 3, wherein the user input unit receives a user input for replacing the selected icon with a another icon, and the controller controls the display unit to display the additional information regarding a content item corresponding to the other icon.

7. The display apparatus according to claim 2, wherein the additional information includes integrated information corresponding to all of the plurality of content items.

8. The display apparatus according to claim 1, wherein each of the plurality of icons is displayed as a thumbnail image.

9. A control method of a display apparatus, the control method comprising:
receiving a user input;
displaying a plurality of icons corresponding to a plurality of content items selected by the user input, and at least one function which commonly corresponds to the plurality of content items; and
performing a function selected by another user input.

10. The control method according to claim 9, further comprising:
displaying additional information regarding at least one of the plurality of content items, along with the plurality of icons and the at least one function.

11. The control method according to claim 10, wherein the displaying the additional information comprises displaying the additional information regarding a content item corresponding to a icon selected from among the plurality of icons.

12. The control method according to claim 11, wherein the displaying the plurality of icons comprises displaying the plurality of icons in an overlapped manner with the selected icon being arranged on top.

13. The control method according to claim 11, wherein the selected icon is displayed as highlighted.

14. The control method according to claim 11, further comprising: receiving another user input for replacing the selected icon with another icon, and displaying additional information regarding a content item corresponding to the other icon.

15. The control method according to claim 10, wherein the additional information includes integrated information corresponding to all of the plurality of content items.
